# EUROPEAN PATENT APPLICATION

(11) **EP 3 061 799 A1**
(43) Date of publication of application: **31.08.2016**
(21) Application number: 15382078.2
(22) Date of filing: 25.02.2015
(51) Int. Cl.: C09K 5/16, F28D 20/00

(54) **Method for preparing a thermochemical energy storage material**

(71) Applicant: CONSEJO SUPERIOR DE INVESTIGACIONES CIENTIFICAS, 28006 Madrid (ES)
(72) Inventor: Abadanes Garcia, Juan Carlos, 33011 Oviedo (ES); Alváres Criado, Yolanda, 33011 Oviedo (ES); Alonso Careño, Mónica, 33011 Oviedo (ES)
(74) Representative: Pons

(57) **Abstract**

This invention discloses a method for preparing a thermochemical energy storage material comprising CaO or Ca(OH)₂. The material also comprises a matrix of hard cementitious material containing silica and calcium silicates that result from the reaction of a binder, such as Na₂Si₃O₇, with the external part of the CaO particles originally embedded in the binder. The cementitious material is characterized by the secondary products of a reaction of the calcium silicates with CO₂ at high temperature followed by a calcination step of all formed carbonates. The resulting material displays superior mechanical and chemical properties after many reversible cycles of hydration with H₂O₍ᵥ₎ and dehydration of Ca(OH)₂ and can be used for thermochemical energy storage systems.

## Description

### FIELD OF THE INVENTION

This invention relates to the field of energy storage. It is intended to improve the chemical and mechanical properties of CaO functional materials used in some thermochemical energy storage processes, in which the reaction of hydration of CaO is used to generate heat and the dehydration of Ca(OH)₂ is used to absorb heat.

### DESCRIPTION OF THE PRIOR ART

Energy storage technologies are needed to accommodate demand with supply in large scale energy networks. In particular, in those countries where there is an increasing trend of the share of renewable energy sources.

Among the different options for energy storage, thermochemical energy storage using the CaO/Ca(OH)₂ reversible reaction system are gaining interest because their theoretical advantages to be cost competitive: high energy storage density, fast and efficient solid conversion in a wide range of conditions, suitable reaction temperatures (400-550°C) for efficient heat supply and recovery, use of non-hazardous materials and low cost of the material precursors (CaCO₃) and reactants (water vapor and air).

Ervin (US3973552 and US 4054126), disclosed devices and methods for thermochemical energy storage using several hydroxides such as the CaO/Ca(OH)₂ reversible reaction system, together with mixtures of water vapor and a carrier gas as reacting fluids during hydration and dehydration. In these systems, heat from a thermal solar plant was used during the energy charge operation to preheat the calcium hydroxide and decompose it into calcium oxide and water. During the energy discharge operation, the CaO is re-hydrated, releasing useful heat. They also published ["Storage of solar energy by inorganic oxide/hydroxides"; Bauerle et al. Sharing the sun: Solar technology in the seventies; Proceedings of the Joint Conference, Winnipeg, Canada, August 15-20, 1976. Volume 8], ["Solar Energy Storage Using Reversible Hydration/Dehydration of CaO/Ca(OH)2"; Rosemary et al. AIAA Terrestrial Energy Systems Conference; June 4-6,1979 Orlando, Florida] several heat transfer embodiments and process concepts for large scale energy storage using fixed beds or fluidized beds of CaO/Ca(OH)₂.

The practical application of CaO/Ca(OH)₂ energy storage systems require of CaO functional materials with adequate pore structure for fast hydration reaction with steam at atmospheric pressure. Particles of CaCO₃ are known to shrink on calcination by a range of sintering mechanism, producing CaO particles with suitable mechanical properties and chemical reactivity for a range of industrial scale applications. CaO particles obtained by calcination of cheap natural sources like limestones has shown to be highly reactive at the conditions required in the CaO/Ca(OH)₂ energy storage system ["Kinetics of the CaO/Ca(OH)2 Hydration/Dehydration Reaction for Thermochemical Energy Storage Applications"; Criado et al. Ind. Eng. Chem. Res. 2014, 53, 12594-12601]. However, the molecular volume of Ca(OH)₂ (33.5 m³/mol) is slightly lower than the CaCO₃ molecular volume (36.9 m³/mol) but much higher than the CaO molecular volume (16.9 m³/mol). Therefore, when submitting to hydration these particles of CaO, they tend to produce highly fragile particles due to unavoidable mechanical stresses induced by the swelling effect associated to the formation of Ca(OH)₂ in the interior of the pores of CaO. Since large flow of gases needs to be put in contact with the solids during the fast charge and discharge operations, there are unacceptable losses of CaO material and/or very high pressure losses in the system as more fines are generated by the mechanism described.
Bauerle et al. (see reference above) first suggest the use of sodium silicate as a binder to improve the mechanical stability of the energy storage materials, and tested successfully this binder with MgO/Mg(OH)₂. However, they remain silent about CaO/Ca(OH)₂ materials, that are in theory more suitable for more energy efficient storage systems as they operate in a higher temperature range.
In order to solve the problem of the mechanical stability of CaO/Ca(OH)₂ materials, EP2551325A1 discloses an energy storage CaO material comprising a clay mineral having a layered ribbon structure and a complex metal silicate which is a reaction product of the chemical thermal energy storage material (CaO) and the clay mineral. This patent also teaches an adequate particle size (less than 50 micrometers) and optimum weight fraction of the grains of the energy storage material (20-30%), to achieve a high level of mechanical and chemical properties of the energy storage material. However, the disclosed material is to be used in embodiments where the material does not move (fixed bed or molded structures) and the patent is silent about the performance of this material in fluidized beds, where mechanical forces on fluidizing particles are known to drastically enhance the attrition of fragile particles.

The use of fluidized bed reactors to undertake hydration dehydration reactions of CaO/Ca(OH)₂ has been recently shown to have important theoretical advantages respect similar systems using fixed beds. These advantages are related to the improved heat transfer characteristics of fluidized beds respect to fixed beds and to the possibility to build reactors with much lower volume and heat transfer surface, connected to lower cost silos storing CaO and Ca(OH)₂ ("Conceptual process design of a CaO/Ca(OH)2 thermochemical energy storage system using fluidized bed reactors"; Criado et al. Appl. Therm. Eng. 2014, 73, 1085-1092). However, fluidized bed configurations are likely to exacerbate the mechanical problems of the current thermochemical energy storage materials.

Following the teachings of other high temperature fluidized bed systems described in the state of the art, suitable materials for fluidized bed applications will have crushing strengths of at least 2 Newton, N, ["Measuring attrition resistance of oxygen carrier particles for chemical looping combustion with a customized jet cup"; Ryden et al. Powder Technol. 2014, 254, 75-86]. For energy storage applications using the CaO/Ca(OH)₂ reaction system, they will also have to sustain high hydration and dehydration conversions and rates of reactions, for at least 100 cycles. There is no description of such active material in the state of the art of CaO/Ca(OH)₂ energy storage systems. A fluidizing material with suitable particle size range for fluidization (100-2000 micrometers) and suitable mechanical properties for fluidization and solid transport between fluidized bed reactor and silos, as well as high chemical reactivity is not described in the state of the art. The state of the art is also silent about the performance of possible material candidates in long number of hydration-dehydration cycles under realistic reaction conditions and reaction times in energy storage systems using fluidized bed reactors. The material disclosed in this invention is the result of an experimental investigation searching for a suitable material for its use in all types of thermochemical energy storage applications using CaO/Ca(OH)₂.

### BRIEF DESCRIPTION OF THE INVENTION

The present invention discloses a method for preparing a thermochemical energy storage material comprising the following steps:
a) mixing particles of CaCO₃ with a solution of Na₂Si₃O₇ to produce a hard composite at room temperature,
b) curing the composite in air for at least 30 minutes at temperatures below 110°C and up to 400°C at a slow heating rate no higher than 2°C/min
c) calcining the cured composite in a gaseous mixture at temperatures between 750-850°C during at least 10 min
d) carbonating the composite with CO₂ at temperatures between 500-800°C
e) a second calcination of the material resulting from d) in air at temperatures between 750-850°C during at least 10 min.

In a preferred embodiment, the carbonation step takes place with pure CO₂ at atmospheric pressure and at temperatures between 700 - 750°C while the calcination of the carbonates takes place in air at 850°C.

The present invention also refers to a thermochemical energy storage material prepared by a method as previously defined, comprising a mixture of porous particles of CaO embedded in a hard cementitious matrix containing calcium silicates formed by the reaction of Na₂Si₃O₇ with the external part of the particles of CaO combined with the secondary products of a carbonation reaction of the calcium silicates with CO₂ at high temperature followed by a calcination step of all formed carbonates.

In a preferred embodiment, the material is in pellet or particle form and the CaO particles have a diameter between 10-200 micrometers, more preferably 30 micrometers. The weight fraction of CaO particles is between 0.4-0.9, more preferably 0.7.

It further constitutes an object of the present invention the use of a material as previously defined in thermochemical energy storage systems involving cyclic hydration processes of the material with concentrated H₂O₍ᵥ₎ to form Ca(OH)₂ followed by the dehydration reaction of the material to form CaO and H₂O₍ᵥ₎.

### DESCRIPTION OF THE INVENTION

This invention discloses a method for preparing an energy storage material containing CaO that maintains adequate chemical and mechanical properties after many reversible cycles of hydration of CaO with H₂O₍ᵥ₎ and dehydration of Ca(OH)₂.

The material is a result of an investigation of screening potential candidates from the state of the art, following the set of targets below:
- a weight fraction gain of at least 1/3 of the theoretical maximum (0.321 is the weight fraction gained by a certain mass of pure CaO completely hydrated to Ca(OH)₂) after 100 standard hydration-dehydration cycles (each cycle consisting in submitting a sample of around 10-15 mg of calcined material to 5 minutes of hydration in pure steam at 450°C and 5 minutes of dehydration in pure steam at 550°C).
- a particulate material with particle size between 100-2000 micrometers, with a sustained crushing strength higher than 2 N after 100 standard hydration-dehydration cycles.

In a particular series of test, mixtures of CaCO₃ in granular form with average particle size between 36-63 micrometers where mixed with a solution of sodium silicate, Na₂Si₃O₇. After curing the mixtures (one possible recipe for curing is given in the example), a hard solid material (crushing strengths between 24-30 N) was obtained in the form of a small pellet of between 1-3 mm equivalent diameter. After calcination of this material at preferably between 750-850°C, the fraction of CaO to binder was between 70-80 weight%. The resulting composite particles displayed adequate initial mechanical properties (crushing strength > 17 N). The crushing strength was substantially lower when similar test were conducted with precursors such as CaO and Ca(OH)₂, the later requiring much large quantities of binder to achieve similar initial crushing strengths. Therefore, all subsequent tests were conducted using CaCO₃ particles as a CaO precursor.

XRD analysis of the samples detected the formation of Ca₂SiO₄ and Na₂CaSiO₄ as main reaction products between CaO and Na₂Si₃O₇ during calcination of the material, as follows.

CaO + Na₂Si₃O₇ → Na₂CaSiO₄ + SiO₂ [1]

2CaO + SiO₂ → Ca₂SiO₄ [2]

After hydration-dehydration cycles in pure steam of the above material, XRD analysis detected calcium silicate hydrated phases, mainly calcium-chondrodite Ca₅(SiO₄)₂(OH)₂, which reveals as an adequate cementitious material candidate because it has good crushing strength properties..

9Ca₂SiO₄ + 2H₂O → 2Ca₅(SiO₄)₂(OH)₂ + Ca₈(SiO₄)₂(Si₃O₁₀) [3]

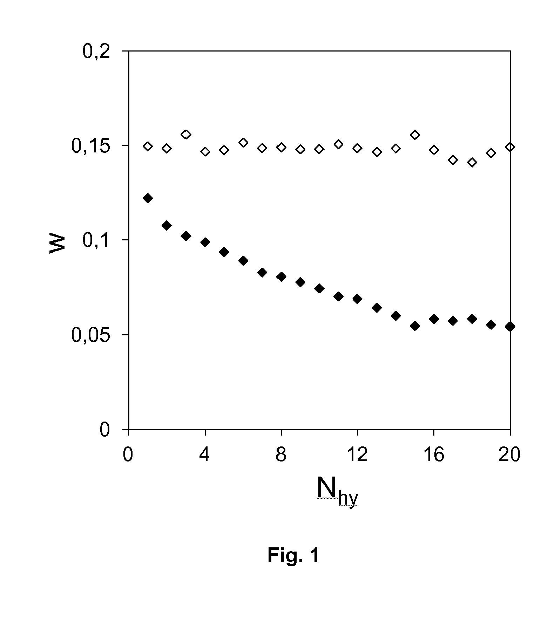

Unfortunately, it became clear during a series of 100 standard hydration-dehydration test with this material that the material was progressively losing the reactivity towards hydration (see Figure1), with a decay in the weight fraction of H₂O₍ᵥ₎ absorbed by the calcined material in 450°C steam below 0.07 after 20 standard hydration-dehydration cycles. The crushing strength also decreased along cycling (from 17 N before the first hydration cycle to 10.2 N after 20 cycles) but stabilizes after 40 cycles (crushing strength 8.0 N) as it remains at 7.5 N after 100 cycles. This can be considered highly suitable for practical applications including fixed and fluidized bed reactors.

The previous experiments allowed us to make one important observations: the decay in the weight fraction of H₂O₍ᵥ₎ absorbed by the calcined material with the number of hydration-dehydration cycles takes place in parallel with the increase in the XRD picks of Ca₅(SiO₄)₂(OH)₂, that are the result of the reaction of Ca₂SiO₄ (formed after the reaction of CaO from the precursor with the SiO₂ resulting from reaction [1]) with H₂O₍ᵥ₎. This was confirmed by repeating identical experiments as those described above with particle sizes of precursors of 200-400 micrometers and d₅₀=14 micrometers. These results indicated that the formation of complex hydrated forms of calcium silicate in the cementitious matrix was a likely cause of the reduction of porosity of the cementitious matrix, making slower the diffusion process of H₂O₍ᵥ₎ through such cementitious matrix towards the active particles of CaO. Indeed, when longer hydration times were allowed (20 minutes) it was experimentally observed that the decay in the weight fraction of H₂O₍ᵥ₎ absorbed by the calcined material with the increasing number of hydration-dehydration cycles was less pronounced.

In an attempt to search for conditions to maintain higher chemical activity while maintaining mechanical strength of the material during hydration, we tested a reaction of fast carbonation and fast calcination of the material. The intention was first to induce a minor shrinking of the CaO particles embedded in the composite material, before submitting it to hydration-dehydration cycles. With the particles of CaO being of slightly lower volume than the original particles precursors of CaO, the further reaction of CaO with the cementitious components to form Ca₂SiO₄ and Na₂CaSiO₄ should be reduced or avoided. This should also reduce the subsequent formation of Ca₅(SiO₄)₂(OH)₂ during hydration-dehydration cycles, that had been identified as a possible cause of the deactivation of the material as discussed above. In principle, the required reduction in the volume of CaO particles respect to the volume of CaCO₃ precursor particles could be achieved by calcining the material at very high temperature and/or long calcination times, as calcination is known to induce sintering and particle shrinking in these conditions. However, test at temperatures over 900°C and 24 hours indicated that the mechanical strength of the material was lower after these intense calcination conditions, due to the complex interactions between calcium silicates in these conditions, leading to components with less suitable mechanical properties.

In contrast with the above results, the material resulting from the carbonation-calcination cycle had all the favorable characteristics that had been set as initial targets. The additional carbonation-calcination reaction cycle had resulted in a material that is mechanically and chemically stable during hydration and dehydration reactions, comprising a mixture of porous particles of CaO embedded in a hard cementitious matrix containing calcium silicates formed by the reaction of Na₂Si₃O₇ with the external part of the particles of CaO characterized by the secondary products of a carbonation reaction of the calcium silicates with CO₂ at high temperature followed by a calcination step of all formed carbonates.

To further elucidate on the nature of the complex material resulting from the new reactions steps of carbonation and calcination, samples of the material disclosed in this invention were prepared from a mixture of very fine particles of CaCO₃ (co-precipitated d₅₀=14micrometers) and a high fraction of Na₂Si₃O₇. This facilitated the complete reaction of CaO with the Na₂Si₃O₇ to form calcium silicates and the subsequent carbonation of these silicates with CO₂ without the interference of the carbonation of free CaO to CaCO₃. The XRD analysis of the resulting samples after carbonation in pure CO₂ and 750°C revealed the presence of Ca₅(SiO₄)₂CO₃ and Na₂Ca(CO₃)₂/Ca₂Na₂(CO₃)₃, indicating the reaction of some of the complex silicates with CO₂ to form these complex carbonates. Materials carbonated at 750°C had a high crushing strength (19 N). The same carbonation test conducted at 650°C yielded a material with less crushing strength (10 N). This can be explained by the fact that a certain fraction of free CaCO₃ were detected by XRD after carbonation at 650°C in the samples with a high fraction of Na₂Si₃O₇, which is thermodynamically allowed at this lower carbonation temperatures by the direct decomposition of Ca₂SiO₄ to yield CaCO₃ and SiO₂. Both temperatures of carbonation were able to yield materials with good reactivity but the crushing strength after calcination of the materials carbonated at 750°C was higher than the crushing strength of the calcined material that had been carbonated at 650°C and calcined at 850°C.

Therefore, a preferred characteristic of the material disclosed in this invention is that it contains a mixture of product of reactions of CO₂ with the complex calcium silicates obtained by reaction of CaO with Na₂Si₃O₇, wherein the carbonation reactions takes place with pure CO₂ at atmospheric pressure at temperatures between 500-800°C, preferably between 700-750°C, as this carbonation temperature avoids the formation of CaCO₃ in the cementitious matrix.

The introduction of the additional carbonation-calcination step translates into a much better performance of the material in terms of chemical activity along cycling in standard hydration dehydration test (see Figure 1). The crushing strength of the material was maintained at values higher than 7.5 N after 100 standard hydration-dehydration cycles.

These materials yield similar chemical and mechanical properties at different temperature of calcination higher than 700°C in air. But in order to promote a full calcination of any other carbonate (including CaCO₃) in relatively short periods of time it is a preferred characteristic of the material to be the result of a calcination reaction wherein the calcination of the carbonates takes place in air at 850°C.

The experimental investigation of the chemical reactivity and mechanical strength of the material in pellet or particle form (for fixed bed or fluidized bed applications) using different particle sizes of the CaO precursors and different weight fractions of precursors and Na₂Si₃O₇, reveals that an adequate particle size range for the CaO particles in the material is between 10-200 micrometers, preferably 30 micrometers.

Concerning the weight fraction of free CaO particles respect to the cementitious matrix in the material of this invention it is preferred to maintain this between 0.4-0.9, preferably 0.7 as this is a compromise between mechanical strength (higher than 7.5 N after 100 cycles) and the need of a high fraction of free CaO that provides chemical reactivity towards hydration-dehydration cycles.

The experimental screening of conditions and materials has revealed a preferred method to manufacture the material of this invention, characterized by the following steps:
a) mixing particles of CaCO₃ with a solution of Na₂Si₃O₇ to produce a hard composite at room temperature,
b) curing the composite in air for at least 30 minutes at temperatures below 110°C and up to 400°C at a slow heating rate no higher than 2°C/min
c) calcining the cured composite in a gaseous mixture at temperatures between 750-850°C during at least 10 min
d) carbonating the composite with CO₂ at temperatures between 500-800°C
e) a second calcination of the material resulting from d) in air at temperatures between 750-850°C during at least 10 min.

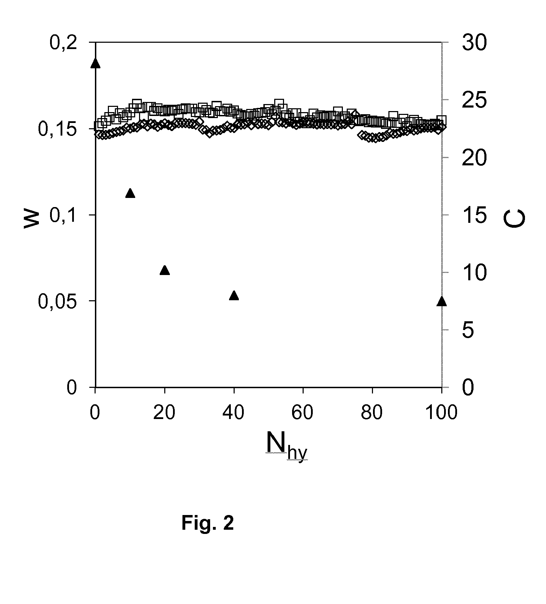

The material produced following the previous method was tested in experiments of long duration including some conducted under realistic temperatures and partial pressures of H₂O₍ᵥ₎ (100 cycles dehydration in 550°C steam, as indicated by the white circles in Figure 2). Similar series of test were also carried out using milder dehydration conditions (500°C in air, corresponding to the white squares in Figure 2). The stability of the weight fraction of H₂O₍ᵥ₎ absorbed by the calcined material along cycling confirmed the reversibility of the material towards cyclic hydration-dehydration cycles. The stability of the crushing strength values after cycling was also satisfactory. This confirmed the suitability of the use of the material disclosed in this invention in thermochemical energy storage systems involving cyclic processes hydration of the material with concentrated H₂O₍ᵥ₎ to form Ca(OH)₂ followed by the dehydration reaction of the material to form CaO and H₂O₍ᵥ₎.

### BRIEF DESCRIPTION OF THE DRAWINGS

A set of drawings is attached wherein, with illustrative and non-limiting character, the following has been represented:
**Figure 1****:** shows the weight fraction of H₂O₍ᵥ₎ absorbed (w) by two composite material at 450°C in pure steam at atmospheric pressure vs. the number of hydration-dehydration cycles (N_{hy}). Dehydration is carried out at 550°C in pure steam in both cases. The white diamonds correspond to the material claimed in this invention while the black diamonds correspond to a material without the secondary products resulting from a carbonation and calcination steps of the material.
**Figure 2****:** shows similar experimental results on similar materials ant test conditions for a longer number of cycles (white diamonds, left axis) with occasional measurements of the crushing strength (black triangles, right axis). The white squares correspond to similar material and test conditions except the dehydration step (carried out at 500°C in air).

### EXAMPLES

As an example of the teachings of this invention, the detailed manufacture of a material and the testing procedure of the material regarding chemical reactivity and mechanical strength is presented in this Example. The precursor of the material was a limestone with 98.7%w CaCO₃, sieved and washed to a particle size range of 36-63 micrometers. A mass of 1.4 g of CaCO₃ was mixed in a crucible with a mass of 0.6 g of solution of Na₂Si₃O₇ (Na₂O, ∼10.6% SiO₂, ∼26.5%, Sigma-Aldrich Co. LLC.) at room temperature. This mixture was allowed to settle and cure in oven at 80°C during 15 min, then 110°C during 15 min and finally the temperature was increased to 400°C at a heating rate of 2°C/min. The initial crushing strength (measured using dynamometer SHIMPO FGE-5X located in a manual test stand SHIMPO MFGS-100L) of the sample was 28.1 N compared to the crushing strength of the CaCO₃ of 7-9 N.

For hydration/dehydration reactions in pure steam/air at temperatures between 450-550°C and initial calcination/carbonation in air/CO₂ at temperatures between 700-850°C an experimental set-up designed for long multi-cycle gas-solid reactions at atmospheric pressure and adapted for operating with pure steam or air-steam mixtures was employed. The experimental set-up comprises a thermogravimetric analyzer and a steam generation line. The thermogravimetric analyzer consists of a quartz tube (2.5x10⁻² m) placed in a furnace capable of working at temperatures up to 1000°C. A total gas flow of 7.3x10⁻⁶ m³/s (STP) around the sample was set, equivalent to 0.05 m/s at 550°C. The steam generation line comprises two pressurized bottles that, through a liquid mass flow controller, provide distillated water to a heated pipe. Filters and a needle valve at the start of the heated pipe are used to obtain a uniform and stable vaporization of the liquid water by generating a large pressure drop in the needle valve that dump the small variations of pressure during the evaporation of liquid drops. The system generates continuously steam during hydration/dehydration tests. A three-position pneumatic valve allows changing from pure steam to air/CO₂ conditions inside the thermogravimetric analyzer.

By calcination of the precursor in air at 850°C, a material is obtained characterized by a mixture of porous particles of CaO embedded in a hard cementitious matrix resulting from the reactions of sodium silicate with the external part of the particles of CaO at temperatures between 750-850°C used during calcination in the TG equipment. During calcination at temperatures between 750-850°C, Ca₂SiO₄ and Na₂CaSiO₄ are formed, as detected by XRD analyzer (Bruker D8 powder diffractometer equipped with a CuKα monocromatic X-Ray tube, step size of 0.02°, scan step 1 s and scan rage from 5° to 60° 2θ). The initial crushing strength of the mixture of porous particles of CaO embedded in a hard cementitious matrix was >17 N compared to the crushing strength of the CaO of 3-4 N.

After the calcination in air at 850°C, around 10-15 mg of CaO embedded in the hard cementitious matrix is subjected to 100 cycles of hydration in 450°C of steam during at least 5 min and dehydration in 500°C air during at least 5 min (white squares in Figure 2). For hydration-dehydration in more realistic conditions (i.e. steam tests), after the calcination in air at 850°C the CaO embedded in the hard cementitious matrix is carbonated in CO₂ at 750°C during 20 min and then calcined in air at 850°C during 10 min. During the carbonation complex silicates are formed (Ca₅(SiO₄)₂CO₃ and Na₂Ca(CO₃)₂/Ca₂Na₂(CO₃)₃ mainly as detected by XRD) and the resulted material is mechanically and chemically stable during hydration and dehydration reactions. After the carbonation in CO₂ at 750°C, the hard cementitious matrix in which porous particles of CaO are embedded is characterized by the secondary products of a carbonation reaction of the calcium silicates with CO₂ at high temperature followed by a calcination step of all formed carbonates. After the calcination/carbonation/calcination stages, around 10-15 mg of CaO embedded in the hard cementitious matrix is subjected to hydration in 450°C steam during at least 5min and dehydration in 550°C steam during at least 5min inside the TG equipment (white circles in Figure 2).

In any all the above mentioned cases, a weight fraction of H₂O₍ᵥ₎ absorbed by the calcined material of around 0.13-0.16 is maintained for long cycling (>100 cycles) and the crushing strength remained stable at values >7.5 N compared to the crushing strength of the CaO/Ca(OH)₂ particles after >3 cycles of <2 N.

## Claims

1. A method for preparing a thermochemical energy storage material comprising the following steps:
a) mixing particles of CaCO₃ with a solution of Na₂Si₃O₇ to produce a hard composite at room temperature,
b) curing the composite in air for at least 30 minutes at temperatures below 110°C and up to 400°C at a slow heating rate no higher than 2°C/min
c) calcining the cured composite in a gaseous mixture at temperatures between 750-850°C during at least 10 min
d) carbonating the composite with CO₂ at temperatures between 500-800°C
e) a second calcination of the material resulting from d) in air at temperatures between 750-850°C during at least 10 min.

2. The method of claim 1, wherein the carbonation step takes place with pure CO₂ at atmospheric pressure and at temperatures between 700-750°C.

3. The method of anyone of claims 1 and 2, wherein the calcination of the carbonates takes place in air at 850°C.

4. A thermochemical energy storage material prepared by a method as defined in claims 1 to 3, comprising a mixture of porous particles of CaO embedded in a hard cementitious matrix containing calcium silicates formed by the reaction of Na₂Si₃O₇ with the external part of the particles of CaO combined with the secondary products of a carbonation reaction of the calcium silicates with CO₂ at high temperature followed by a calcination step of all formed carbonates.

5. The thermochemical energy storage material of claim 4, wherein the material is in pellet or particle form and the CaO particles have a diameter between 10-200 micrometers.

6. The thermochemical energy storage material of claim 5, wherein the CaO particles have a diameter of 30 micrometers.

7. The thermochemical energy storage material of anyone of claims 5 and 6, wherein the weight fraction of CaO particles is between 0.4-0.9.

8. The thermochemical energy storage material of claim 7, wherein the weight fraction of CaO particles is 0.7.

9. Use of a material as defined in claims 4 to 8 in thermochemical energy storage systems involving cyclic hydration processes of the material with concentrated H₂O₍ᵥ₎ to form Ca(OH)₂ followed by the dehydration reaction of the material to form CaO and H₂O₍ᵥ₎.
